# EUROPÄISCHE PATENTANMELDUNG

(11) **EP 2 047 768 A2**
(43) Veröffentlichungstag der Anmeldung: **15.04.2009**
(21) Anmeldenummer: 08016334.8
(22) Anmeldetag: 17.09.2008
(51) Int. Cl.: A47B 95/02

(54) **Griffleiste mit Endkappen und Schraubkanal**

(30) Priorität: 10.10.2007 DE 202007014166 U
(71) Anmelder: Otto Ganter GmbH & Co. KG Normteilefabrik, 78120 Furtwangen (DE)
(72) Erfinder: Wild, Burkhard, 78120 Furtwangen (DE)
(74) Vertreter: Riebling, Peter

(57) **Zusammenfassung**

Die Erfindung betrifft eine Griffleiste mit Endkappen und Schraubkanal zur Handhabung von Möbelfronten, wobei die Griffleiste aus einem im Strangpressverfahren extrudierten Aluminiumprofil gebildet ist und einen Basischenkel aufweist, welcher ein oder mehrere Gewindebohrungen aufweist und auf einer Befestigungsfläche zur Befestigung mittels entsprechender Befestigungsmittel aufsitzt und an den stirnseitigen Enden der Griffleiste Endkappen angeordnet sind.

Die Erfindung ist dadurch gekennzeichnet, dass in dem Aluminium-Strangpressprofil mindestens ein sich über die Längsachse im Bereich des Basisschenkels erstreckender Schraubkanal angeordnet ist, der geeignet ist, an beliebigen Stellen den Gewindebolzen von dort einzuschraubenden Gewindeschrauben aufzunehmen und dass ferner die Endkappen mindestens teilweise mit zugeordneten Befestigungsstopfen in Richtung der Längsachse des Schraubkanals in diesen Schraubkanal eingreifen und dort klemmend aufgenommen sind.

## Beschreibung

Gegenstand der Erfindung ist eine Griffleiste mit Endkappen und Schraubkanal nach dem Oberbegriff des Patentanspruches 1.

Griffleisten werden für unterschiedlichste Handhabungszwecke verwendet. Sie werden an Möbelfronten, insbesondere an Schiebetüren, Schubladen, Drehtüren oder Drehflügeln angebracht, um eine Angriffsmöglichkeit an dem zu betätigenden Teil zu ermöglichen.

Es ist bekannt, solche Griffleisten aus einem extrudierten Aluminiumprofil auszubilden, wobei die Profilform eines solchen extrudierten Aluminiumprofils zum Beispiel ein Halbrundprofil, ein Ovalprofil oder dergleichen sein kann. Bei derartigen Aluminiumgriffleisten, die durch ein Strangpressverfahren hergestellt werden, besteht allerdings der Nachteil, dass die Befestigung eines solchen Profils auf einer Befestigungsfläche relativ aufwändig ist. Es ist bekannt, an einem Basisschenkel, der auf der Befestigungsfläche aufsitzt, ein oder mehrere Gewindebohrungen anzubringen, die in das Material der Aluminium-Griffleiste hineinreichen.

Nachteil dieser bekannten Befestigung ist jedoch, dass diese Bohrungen genau einer gegenüberliegenden Bohrung in der Befestigungsfläche gegenüberliegen müssen und damit fluchten müssen, um eine ausreichende Befestigung zu ermöglichen. Damit besteht der Nachteil, dass wegen der Einbringung von separaten Gewindebohrungen in den Basisschenkel der Aluminium-Griffleiste hohe Kosten bei der Herstellung entstehen. Zusätzlich bestehen bei der Befestigung Nachteile, weil eben die Befestigungsbohrungen genau fluchtend zu den gegenüberliegenden Bohrungen in der Befestigungsfläche angeordnet werden müssen.

Außerdem besteht der weitere Nachteil, dass man nur wahlweise so viel Befestigungsschrauben anbringen kann wie Befestigungsbohrungen im Basisschenkel der Aluminiumgriffleiste angeordnet sind. Weil in der Regel nur zwei auseinanderliegende Gewindebohrungen angebracht sind, ist die Haltekraft einer solchen Griffleiste auch eingeschränkt. Will man mehr Befestigungsbohrungen anbringen, sind auch mehr Arbeitsvorgänge notwendig, was wiederum die Herstellungskosten erhöht.

Ferner ist es bei solchen bekannten Griffleisten nicht bekannt, auch relativ einfach die stirnseitig angeordneten Endkappen zu befestigen. Bisher ist es lediglich bekannt, eine solche Griffleiste ohne Endkappen zu verwenden, weil es bisher an den geeigneten Befestigungsmöglichkeiten für derartige Endkappen fehlte.

Der Erfindung liegt deshalb die Aufgabe zugrunde, eine Griffleiste aus Aluminium-Strangpressprofil der eingangs genannten Art so weiterzubilden, dass auf besonders einfache Weise eine Befestigung der Griffleiste an Befestigungsflächen möglich ist und dass gleichzeitig auch noch eine günstige Befestigung von stirnseitig angeordneten Endkappen gegeben ist.

Zur Lösung der gestellten Aufgabe ist die Erfindung dadurch gekennzeichnet, dass in dem Aluminium-Strangpressprofil mindestens ein sich über die Längsachse im Bereich des Basisschenkels erstreckender Schraubkanal angeordnet ist, der geeignet ist, an beliebigen Stellen den Gewindebolzen von dort einzuschraubenden Gewindeschrauben aufzunehmen und dass ferner die Endkappen mindestens teilweise mit zugeordneten Befestigungsstopfen in Richtung der Längsachse des Schraubkanals in diesen Schraubkanal eingreifen und dort klemmend aufgenommen sind.

Mit der gegebenen technischen Lehre ergibt sich der wesentliche Vorteil, dass nun eine einfache Befestigung der Griffleiste an Befestigungsflächen gegeben ist, denn Dank der Anordnung eines sich bevorzugt über die gesamte Längsseite der Griffleiste erstreckenden Schraubkanals ist es nun erstmals möglich, Befestigungsschrauben an beliebiger Position der Befestigungsfläche und in beliebiger Zahl in den Schraubkanal einzuschrauben. Es bedarf deshalb nicht mehr der Anbringung von separaten Gewindebohrungen, weil solche Gewindebohrungen nun erfindungsgemäß ersetzt sind durch einen sich über die Längsachse erstreckenden Schraubkanal.

Damit besteht der Vorteil, dass solche Gewindeschrauben an beliebiger Stelle in den Schraubkanal eingeschraubt werden können und das Gewindeprofil des Gewindebolzens der Gewindeschraube greift selbsttätig in die Rillen des Schraubkanals hinein, so dass eine absolut sichere Befestigung an beliebigen Stellen im Schraubkanal gegeben ist.

Bevorzugt handelt es sich bei der Befestigung der vorliegenden Griffleiste um eine einseitige Befestigung der Griffleiste im Bereich eines Basisschenkels, wobei im Bereich dieses Basisschenkels erfindungsgemäß der Schraubkanal ausgebildet ist, der jeweils stirnseitig durch Anschlagflächen begrenzt ist, welche Anschlagflächen satt an der zugeordneten Befestigungsfläche anlegen und dort das Gegenlager bilden.

Bei der Ausbildung der Endkappen wird bevorzugt, wenn die Endkappen sowohl Befestigungsstopfen aufweisen, welche dem Profil des Schraubkanals angepasst sind und die sich ebenfalls klemmend und gegebenenfalls auch unter leichter Verformung in dem Schraubkanal festsetzen.

Ein solches Griffprofil wird bevorzugt als Rundprofil ausgebildet und ist ebenso im Material des Strangpressprofils der Aluminium-Griffleiste eingearbeitet. In diesem Rundprofil ist bevorzugt ein runder Längskanal ausgebildet und die in diesem runden Längskanal eingreifenden Befestigungsstopfen der Endkappen sind diesem Profil angepasst.

Mit der neuartigen Befestigungstechnik ist es deshalb erstmals möglich, unter geringsten Herstellungskosten sowohl eine beliebige Befestigung einer solchen Griffleiste an Befestigungsflächen an beliebigen Punkten vorzusehen und gleichzeitig eine günstige Halterung für die Endkappen zu ermöglichen. Dies erfolgt Dank des erfindungsgemäßen Schraubkanals, der sich bevorzugt über die gesamte Länge der Griffleiste im Bereich des Basisschenkels erstreckt.

Die Erfindung ist nicht auf die Doppelfunktion des Schraubkanals zur Herstellung einer Befestigung mit zugeordneten Gewindeschrauben und gleichzeitig zur Halterung des Befestigungsstopfens der jeweiligen Endkappe beschränkt.

In einer vereinfachten Ausführungsform kann es auch vorgesehen sein, dass parallel zum Schraubkanal und in der Nähe des Schraubkanals noch rundprofilierte Aufnahmen vorhanden sind, in welche die zugeordneten rundprofilierten Endstopfen der Endkappe eingreifen. In diesem Fall würde also der Schraubkanal lediglich als Befestigungsort für Gewindeschrauben verwendet werden, nicht aber noch als zusätzlicher Befestigungsort für die Befestigungsstopfen der Endkappen.

Die vorliegende Erfindung bevorzugt jedoch die erste Ausführung, bei der der Schraubkanal die oben genannte Doppelfunktion aufweist.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere wesentliche Merkmale und Vorteile der Erfindung hervor.

### Es zeigen:

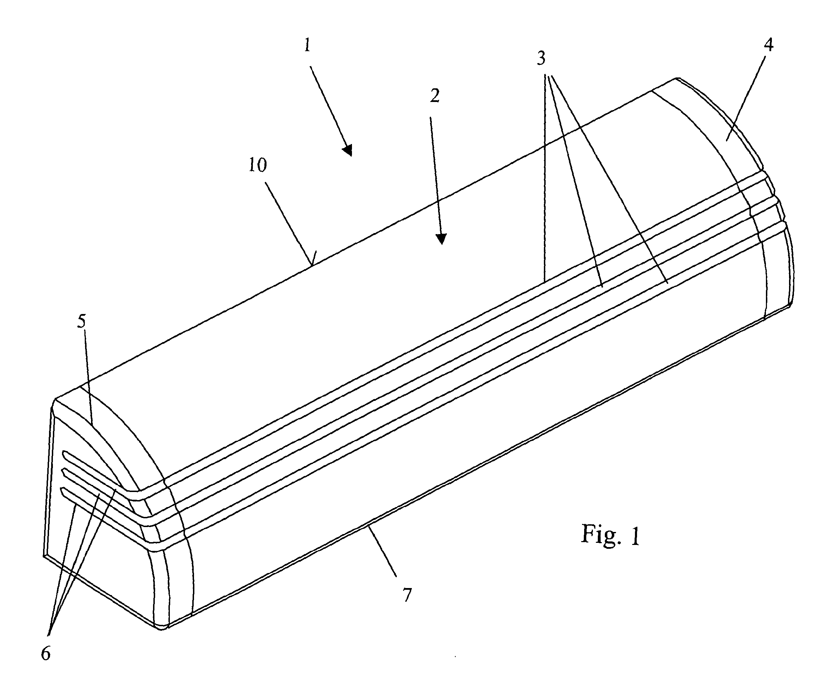

- Figur 1:: perspektivische Außenansicht einer Griffleiste nach der Erfindung

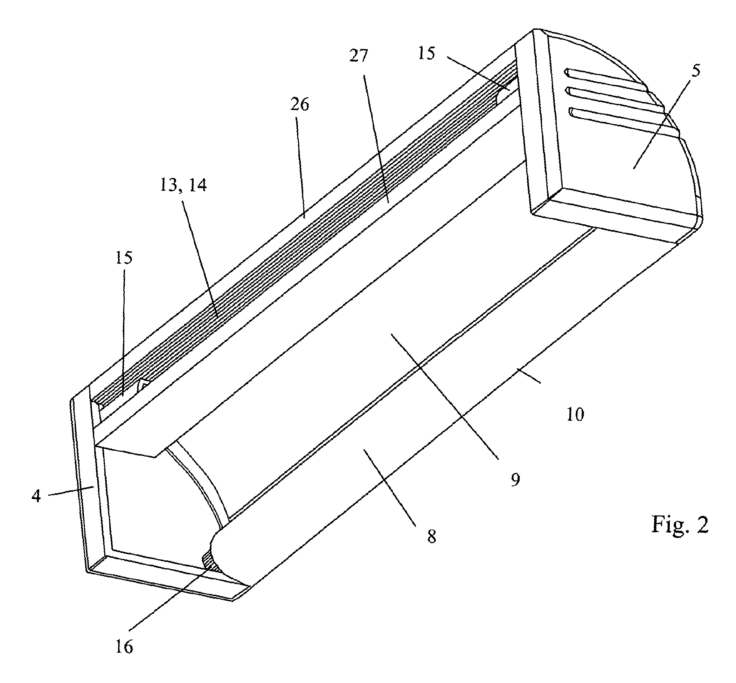

- Figur 2:: die Innenansicht der Griffleiste nach Figur 1
- Figur 3:: eine weitere Darstellung der Innenansicht der Griffleiste
- Figur 4:: die Stirnansicht der Griffleiste bei aufgesteckter Endkappe
- Figur 5:: das Leistenprofil der Griffleiste mit Darstellung der Befestigung der Griffleiste an einer Befestigungsfläche

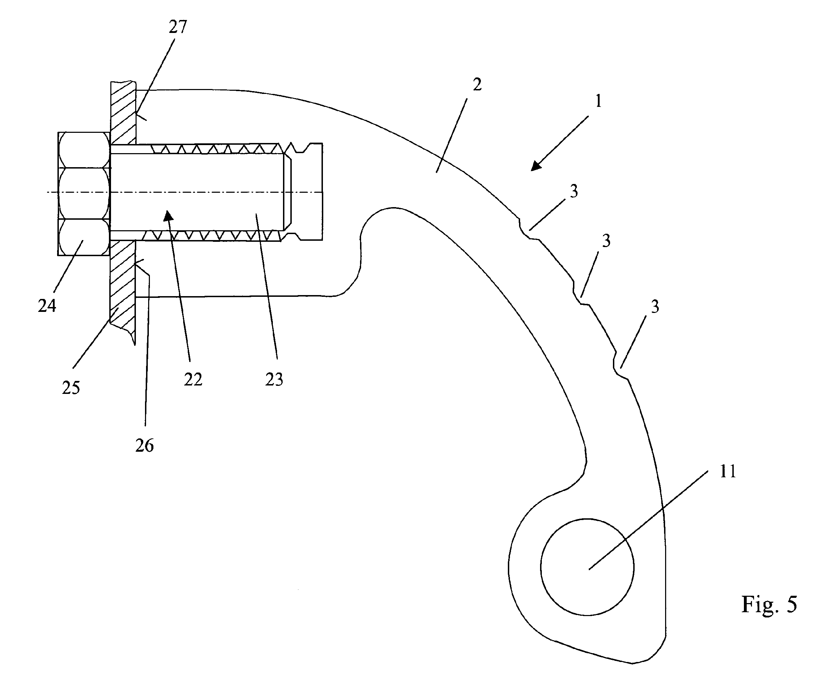

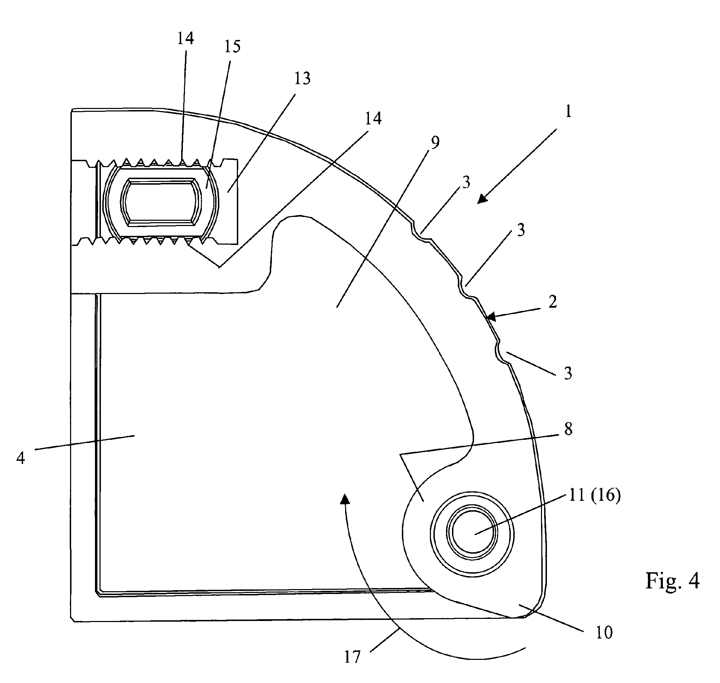

In den Figuren ist allgemeine eine Griffleiste 1 aus einem Aluminium-Strangpressprofil dargestellt, welches aus einem Viertelrund-Profil ausgebildet ist. Hierauf ist die Erfindung jedoch nicht beschränkt. Statt eines Viertelrund-Profiles (siehe z. B. Figuren 4 und 5) können auch andere Profilformen verwendet werden, wie z. B. ein Viertel-Oval-Profil, ein Dreiecks-Profil, ein Mehreck-Profil oder dergleichen mehr. Wichtig ist, dass das Leistenprofil 2 der Griffleiste 1 aus einem Aluminium-Strangpressprofil besteht und bevorzugt an der Außenseite der Griffleiste eine Anzahl von Griffrillen 3 angeordnet sind, die in das Material der Griffleiste 1 eingearbeitet sind.

Jeweils stirnseitig sind auf das Leistenprofil Endkappen 4, 5 aufgesteckt und dort befestigt, welche Endkappen bevorzugt aus einem Kunststoffmaterial bestehen.

Hierbei wird bevorzugt, wenn sich die Griffrillen 3 des Leistenprofils 2 sich auch in den Bereich der Endkappen 4, 5 in Form von Griffrillen 6 fortsetzen.

Zur Befestigung der Griffleiste 1 gemäß Figur 5 an einer beliebigen Befestigungsfläche 25 liegt somit der Auflageschenkel 7 des Leistenprofils 2 auf der Befestigungsfläche 25 auf und bildet dort zwei Anschlagflächen 26, 27 aus. Im Bereich dieser Anschlagflächen 25, 26 ist der erfindungsgemäße Schraubkanal 13 angeordnet. Weitere Erläuterungen werden anhand der Figuren 4 und 5 später gegeben.

Im Befestigungszustand ragt somit der gegenüberliegende Schenkel 7 der Griffleiste 1 von der Befestigungsfläche 25 ab, so dass die gesamte Griffleiste 1 in Pfeilrichtung 17 hintergriffen werden kann und hierbei eine Griffkante 10 gebildet wird, die bevorzugt abgerundet ausgebildet ist.

Diese Griffkante 10 ist im Bereich eines Griffprofils 8 angeordnet, welches bevorzugt rundprofiliert ist und welche die Eingriffsöffnung 9 für die Griffleiste 1 nach unten beschränkt.

Im Bereich des Griffprofils 8 ist ein rundprofilierter Längskanal 11 im Strangpressprofil angeordnet, der als Aufnahmebogen für die Befestigungsstopfen 16 der Endkappen 4, 5 dient, die formschlüssig in diesen Längskanal 11 eingreifen und dort befestigt sind.

Wichtig ist nun, dass im Bereich der Befestigungsfläche 25 der oben genannte Schraubkanal 13 ausgebildet ist, der ein Gewindelängsprofil 14 aufweist. Dies ist am besten aus den Figuren 5 und 6 zu erkennen. Es handelt sich hierbei um dreieckförmige Profilrillen, die sich parallel zur Längsachse des Schraubkanals 13 erstrecken und in das Material des Schraubkanals 13 hineinragen.

Die Endkappen 4, 5 haben dem Profil des Schraubkanals 13 angepasste Befestigungsstopfen 15, die in diesen Schraubkanal 13 hineingreifen und durch das Gewindelängsprofil 14 leicht verformt werden, um dort einen strammen, verschiebungsfreien Sitz zu ermöglichen. Auf diese Weise werden die Endkappen 4, 5 besonders einfach und günstig durch Aufstecken in den beiden Kanälen 11, 13 befestigt.

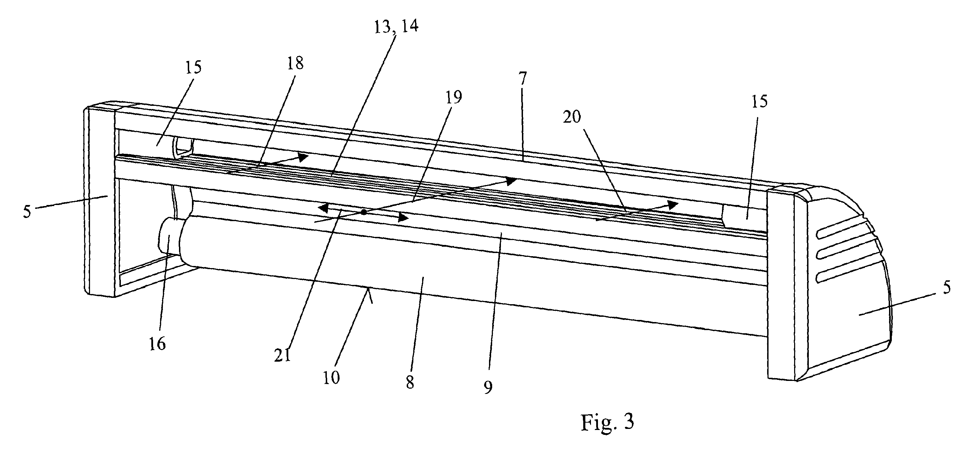

Wichtig ist nun, dass der Schraubkanal 13 die Möglichkeit gibt, dass gemäß Figur 3 an beliebiger Stelle eine Gewindeschraube 22 in den Schraubkanal 13 eingeschraubt werden kann. Dies ist in Figur 3 dadurch angedeutet, dass beispielsweise bei den Positionen 18, 19, 20 jeweils an beliebiger Stelle die Möglichkeit besteht, eine solche Gewindeschraube 22 oder auch mehrere Gewindeschrauben in beliebiger Anzahl in den Schraubkanal 13 einzuschrauben und hierbei keinerlei weitere Befestigungsbohrungen notwendig sind. Damit kann die Befestigungsschraube vor dem Einschrauben in den Schraubkanal 13 auch in den Pfeilrichtungen 21 verschoben werden, so dass die gesamte Länge des Schraubkanals 13 für die Befestigung einer beliebigen Anzahl von Gewindeschrauben 22 genutzt werden kann.

Gemäß Figur 5 besteht jede Gewindeschraube 22 aus einem Gewindebolzen 23, der sich selbstschneidend unter Verformung des Gewindelängsprofils 14 in den Schraubkanal 13 an einer beliebigen Position 18-20 einschraubt, wobei sich dann der Schraubenkopf 24 an einer zugeordneten Bohrung im Bereich der Befestigungsfläche 25 anlegt.

Im Übrigen ist es nicht notwendig, als Gewindeschraube 22 eine selbstschneidende Schraube zu verwenden, sondern so werden handelsübliche Gewindeschrauben verwendet, die unter leichter Verformung des Gewindelängsprofils 14 in den Schraubkanal 13 eingeschraubt werden. Es bedarf also nicht der Anwendung von Spezialschrauben.

Insgesamt lässt sich somit feststellen, dass eine besonders kostengünstig herstellbare Griffleiste mit einfacher Befestigung von Endkappen 4, 5 gegeben ist, was beim Stand der Technik noch nicht bekannt war.

### Zeichnungslegende

- 1: Griffleiste
- 2: Leistenprofil
- 3: Griffrille
- 4: Endkappe
- 5: Endkappe
- 6: Griffrille
- 7: Auflageschenkel
- 8: Griffprofil
- 9: Eingriffsöffnung
- 10: Griffkante
- 11: Längskanal
- 13: Schraubkanal
- 14: Gewindelängsprofil
- 15: Befestigungsstopfen
- 16: Befestigungsstopfen
- 17: Pfeilrichtung
- 18: Position
- 19: Position
- 20: Position
- 21: Pfeilrichtung
- 22: Gewindeschraube
- 23: Gewindebolzen
- 24: Schraubenkopf
- 25: Befestigungsfläche
- 26: Anschlagfläche
- 27: Anschlagfläche

## Patentansprüche

1. Griffleiste mit Endkappen und Schraubkanal zur Handhabung von Möbelfronten, wobei die Griffleiste aus einem im Strangpressverfahren extrudierten Aluminiumprofil gebildet ist und einen Basischenkel aufweist, welcher ein oder mehrere Gewindebohrungen aufweist und auf einer Befestigungsfläche zur Befestigung mittels entsprechender Befestigungsmittel aufsitzt und an den stirnseitigen Enden der Griffleiste Endkappen angeordnet sind, **dadurch gekennzeichnet, dass** in dem Aluminium-Strangpressprofil mindestens ein sich über die Längsachse im Bereich des Basisschenkels erstreckender Schraubkanal (13) angeordnet ist, der geeignet ist, an beliebigen Stellen den Gewindebolzen (23) von dort einzuschraubenden Gewindeschrauben (22) aufzunehmen und dass ferner die Endkappen (4, 5) mindestens teilweise mit zugeordneten Befestigungsstopfen (15, 16) in Richtung der Längsachse des Schraubkanals (13) in diesen Schraubkanal (13) eingreifen und dort klemmend aufgenommen sind.

2. Griffleiste mit Endkappen und Schraubkanal nach Patentanspruch 1, **dadurch gekennzeichnet, dass** die Griffleiste (1) ein Leistenprofil (2) aufweist und bevorzugt an der Außenseite der Griffleiste (1) eine Anzahl von Griffrillen (3) aufweist, welche in das Material der Griffleiste (1) eingearbeitet sind.

3. Griffleiste mit Endkappen und Schraubkanal nach einem der vorhergehenden Patentansprüche 1 bis 2, **dadurch gekennzeichnet, dass** stirnseitig auf dem Leistenprofil (2) Endkappen (4, 5) aufgesteckt und dort befestigt sind, wobei sich die Griffrillen (3) des Leistenprofils (2) in den Bereich der Endkappen (4, 5) in Form von Griffrillen (6) fortsetzen und die Endkappen (4, 5) bevorzugt ein Kunststoffmaterial aufweisen.

4. Griffleiste mit Endkappen und Schraubkanal nach einem der vorhergehenden Patentansprüche 1 bis 3, **dadurch gekennzeichnet, dass** das Leistenprofil (2) einen Auflageschenkel (7) aufweist, welcher zur Befestigung auf einer Befestigungsfläche (25) aufliegt und dort zwei Anschlagflächen (26, 27) ausbildet, in dessen Bereichen der Schraubkanal (13) angeordnet ist.

5. Griffleiste mit Endkappen und Schraubkanal nach einem der vorhergehenden Patentansprüche 1 bis 4, **dadurch gekennzeichnet, dass** der der Griffleiste (1) gegenüberliegende Auflageschenkel (7) im Befestigungszustand abragt, wodurch die gesamte Griffleiste (1) in Pfeilrichtung (17) hintergreifbar ist und eine Griffkante (10) gebildet ist, welche bevorzugt abgerundet ausgebildet ist.

6. Griffleiste mit Endkappen und Schraubkanal nach einem der vorhergehenden Patentansprüche 1 bis 5, **dadurch gekennzeichnet, dass** die Griffkante (10) im Bereich eines Griffprofils (8) angeordnet ist, welche eine Eingriffsöffnung (9) für die Griffleiste 1 nach unten beschränkt.

7. Griffleiste mit Endkappen und Schraubkanal nach einem der vorhergehenden Patentansprüche 1 bis 6, **dadurch gekennzeichnet, dass** im Bereich des Griffprofils (8) ist ein rundprofilierter Längskanal (11) im Strangpressprofil angeordnet, welcher als Aufnahmebogen für die an den Endkappen (4, 5) angeordneten Befestigungsstopfen (16) ausgebildet ist, welche formschlüssig in diesen Längskanal (11) eingreifen und dort befestigt sind.

8. Griffleiste mit Endkappen und Schraubkanal nach einem der vorhergehenden Patentansprüche 1 bis 7, **dadurch gekennzeichnet, dass** im Bereich der Befestigungsfläche (25) der Schraubkanal (13) ausgebildet ist, welcher ein Gewindelängsprofil (14) aufweist, welches als dreieckförmige Profilrillen ausgebildet sind, die sich parallel zur Längsachse des Schraubkanals (13) erstrecken und in das Material des Schraubkanals (13) hineinragen.

9. Griffleiste mit Endkappen und Schraubkanal nach einem der vorhergehenden Patentansprüche 1 bis 8, **dadurch gekennzeichnet, dass** die Endkappen (4, 5) dem Profil des Schraubkanals (13) angepasste Befestigungsstopfen (15) aufweisen, die in den Schraubkanal (13) hineingreifen und durch das Gewindeprofil (14) verformt werden, wodurch ein verschiebungsfreier Sitz durch Aufstecken in den Kanälen (11, 13) ausgebildet ist.

10. Griffleiste mit Endkappen und Schraubkanal nach einem der vorhergehenden Patentansprüche 1 bis 9, **dadurch gekennzeichnet, dass** an jeder beliebigen Stelle des Schraubkanals (13), wie z. B. an einer Position (18, 19, 20) eine beliebige Anzahl von Gewindeschrauben (22) in den Schraubkanal (13) einschraubbar sind und die Befestigungsschraube vor dem Einschrauben in den Schraubkanal (13) verschiebbar ist.

11. Griffleiste mit Endkappen und Schraubkanal nach einem der vorhergehenden Patentansprüche 1 bis 10, **dadurch gekennzeichnet, dass** die Gewindeschraube (22) einen Gewindebolzen (23) aufweist, welcher sich selbstschneidend unter Verformung des Gewindelängsprofils (14) in den Schraubkanal (13) an einer beliebigen Position (18, 19, 20) einschraubt, wobei sich der Schraubenkopf (24) an einer zugeordneten Bohrung im Bereich der Befestigungsfläche (25) anlegt.
